# EUROPÄISCHE PATENTSCHRIFT

(11) **EP 1 119 467 B1**
(45) Veröffentlichungstag und Bekanntmachung des Hinweises auf die Patenterteilung: **02.06.2004**
(21) Anmeldenummer: 99946106.4
(22) Anmeldetag: 03.09.1999
(51) Int. Cl.: B60K 35/00, G01D 7/08

(54) **VERFAHREN ZUR INTEGRIERTEN DARSTELLUNG DER PARAMETER EINER ABSTANDSREGELUNGSEINRICHTUNG**
METHOD FOR INTEGRATED REPRESENTATION OF THE PARAMETERS OF A DISTANCE CONTROL DEVICE
PROCEDE DE REPRESENTATION INTEGREE DES PARAMETRES D'UN DISPOSITIF DE REGULATION DE L'ESPACEMENT ENTRE VEHICULES

(30) Priorität: 15.10.1998 DE 19847611
(43) Veröffentlichungstag der Anmeldung: 01.08.2001
(73) Patentinhaber: Volkswagen Aktiengesellschaft, 38436 Wolfsburg (DE)
(72) Erfinder: EBERT, Holger, D-90429 Nürnberg (DE); HEIMERMANN, Matthias, D-38302 Wolfenbüttel (DE); BÖCKMANN, Ingo, D-38551 Ribbesbüttel (DE); RUCHATZ Thomas, D-38165 Lehre (DE)
(86) Internationale Anmeldenummer: PCT/EP1999/006477
(87) Internationale Veröffentlichungsnummer: WO 2000/021773

(56) Entgegenhaltungen:
- EP-A- 0 876 936
- DE-A- 19 539 799
- US-A- 5 410 304
- PATENT ABSTRACTS OF JAPAN vol. 017, no. 497 (M-1476), 8. September 1993 (1993-09-08) & JP 05 124459 A (NIPPON SEIKI CO LTD), 21. Mai 1993 (1993-05-21)
- PATENT ABSTRACTS OF JAPAN vol. 1996, no. 11, 29. November 1996 (1996-11-29) & JP 08 192663 A (MITSUBISHI MOTORS CORP), 30. Juli 1996 (1996-07-30)

## Beschreibung

Die Erfindung betrifft ein Verfahren zur integrierten Darstellung der Parameter einer Abstandsregelungseinrichtung.

Bekannte Abstandsregelungseinrichtung bestehen im wesentlichen aus einer Abstandssensorik, einer Auswerteeinheit, einer Eingabe- und Ausgabeeinheit und einer Steuereinrichtung. Dabei kann über die Eingabeeinheit eine Wunschgeschwindigkeit eingestellt werden, die von der Steuereinrichtung eingestellt und gehalten wird, falls dies der Verkehr erlaubt. Mittels einer derartigen Geschwindigkeitsregelung ist somit sehr einfach eine konstante Reisegeschwindigkeit einstellbar. Aufgrund der Verkehrsdichte kann aber die eingestellte Wunschgeschwindigkeit nicht immer eingehalten werden. Existiert vorausfahrender Verkehr, hilft eine Abstandsregelungseinrichtung, einen bestimmten Sicherheitsabstand automatisch einzuhalten. Dieser gesetzlich vorgeschriebene Sicherheits- bzw. Folgeabstand ist von der Geschwindigkeit abhängig, so daß oftmals auch mit einer geschwindigkeitsabhängigen Folgezeit operiert wird. Dazu wird mittels der Abstandssensorik die Entfernung eines vorausfahrenden Kraftfahrzeuges aus der Laufzeit emittierter Signale ermittelt. Die Geschwindigkeit kann dann mittels einer Differenzmessung oder direkt anhand der Doppler-Verschiebung bestimmt werden. Da nicht jeder Kraftfahrzeugführer mit dem gleichen Folgeabstand fahren möchte, erlauben neuere Abstandsregelungseinrichtungen die Einstellung eines Folgeabstandes innerhalb eines bestimmten Bereiches. Alle diese eingestellten Parameter bzw. erfaßten Parameter müssen nun zur Information für den Kraftfahrzeugführer auf der als Display ausgebildeten Ausgabeeinheit dargestellt werden.

Eine solche Anzeige zur Darstellung verschiedener Parameter ist beispielsweise aus der DE 195 39 799 A1 bekannt, bei der ein erfaßtes Kraftfahrzeug piktogrammförmig dargestellt wird, wobei die Größe des Piktogramms mit abnehmendem Abstand größer wird, um so visuell die Annäherung zu verstärken. Die eingestellte Wunschgeschwindigkeit, die Ist-Geschwindigkeit und die Geschwindigkeit des erfaßten Kraftfahrzeuges werden in einem integrierten Balkendiagramm mittels graphischer Hervorhebung dargestellt. Nachteilig an der bekannten Anzeige von Parametern ist, daß sie einen gewissen Abstraktionsgrad erfordern, was einen schnellen Überblick des Kraftfahrzeugführers über die aktuelle Regelungssituation erschwert.

Der Erfindung liegt daher das technische Problem zugrunde, ein Verfahren zur integrierten Darstellung der Parameter einer Abstandsregelungseinrichtung zu schaffen, mittels dessen die Parameter derart darstellbar sind, daß diese unter Zugrundelegung der aus der normalen Fahraufgabe resultierenden Banspruchnung schnell und einfach für den Kraftfahrzeugführer erfaßbar sind.

Die Lösung des technischen Problems ergibt sich durch die Merkmale des Patentanspruchs 1. Weitere vorteilhafte Ausgestaltungen der Erfindung ergeben sich aus den Unteransprüchen.

Dazu wird zunächst die eingestellte Wunschgeschwindigkeit alphanumerisch am bildlichen Horizont des Anzeigedisplays dargestellt. Weiter wird ein erfaßtes vorausfahrendes Kraftfahrzeug piktogrammförmig dargestellt. In der piktogrammförmigen Darstellung des Kraftfahrzeuges wird dessen Geschwindigkeit alphanumerisch dargestellt, falls diese kleiner als die eingestellte Wunschgeschwindigkeit ist. Weiter wird symbolhaft die Fahrspur dargestellt, in der sich das eigene und das vorausfahrende Kraftfahrzeug befinden, wobei innerhalb dieser Fahrspur ein Dynamikbalken angeordnet ist, dessen Länge die relative Position zu dem Regelziel symbolisiert. Dies führt zu einer integrierten Anzeige aller Parameter, die die Regel-Zusammenhänge aus der Fahrerperspektive versinnbildlicht. Des weiteren erlaubt der innerhalb der Fahrspur angeordnete Dynamikbalken eine schnelle Tendenzeinschätzung, aus der die Regel-Zusammenhänge schnell und leicht erfaßbar sind, so daß kritische Situationen eher erkannt und auf diese entsprechend frühzeitig reagiert werden kann.

Die Erfindung wird nachfolgend anhand eines bevorzugten Ausführungsbeispiels näher erläutert. Die Fig. zeigen:
- Fig. 1: ein Blockschaltbild einer Abstandsregelungseinrichtung
- Fig. 2: eine Anzeigendarstellung bei aktiver Abstandsregelung und
- Fig. 3: eine Anzeigendarstellung bei Geschwindigkeitsregelung.

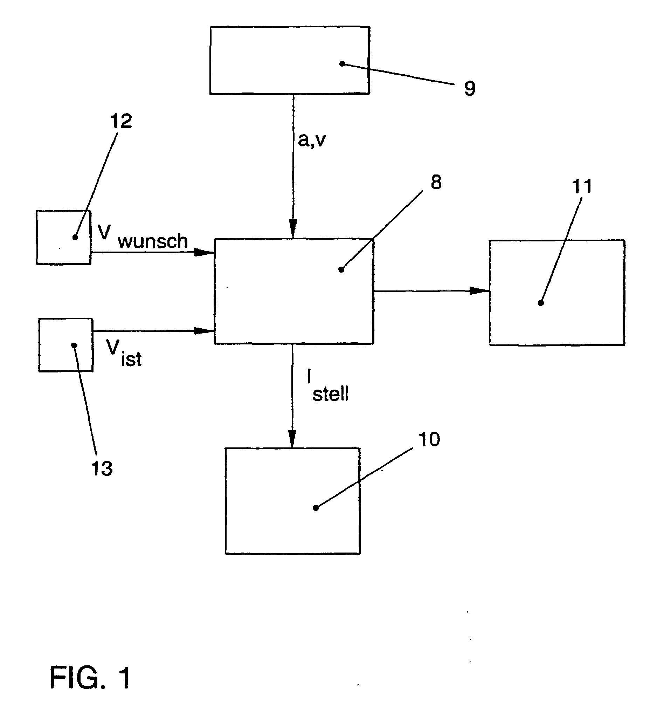

In Fig. 1 ist das vereinfachte Blockschaltbild einer Abstandsregelungseinrichtung gezeigt, welche zumindest aus einer Steuereinheit 8, einer Einrichtung 9 zur Bestimmung des Abstandes zwischen einem vorausfahrenden Kraftfahrzeug und dem eigenen Kraftfahrzeug sowie der Geschwindigkeit des vorausfahrenden Kraftfahrzeuges, mindestens einer Einrichtung 10 zur Beeinflussung der Geschwindigkeit des eigenen Krafhrzeuges, einer Anzeigeeinrichtung 11 zur Darstellung der Parameter der Abstandsregelung, einer Eingabeeinrichtung 12 zur Eingabe der vom Fahrzeugführer vorgebbaren Wunschgeschwindigkeit sowie einer Einrichtung 13 zur Ermittlung der momentanen Fahrgeschwindigkeit des eigenen Fahrzeuges besteht. Zur Aktivierung der Geschwindikgeits- bzw. Abstandsregelung gibt der Fahrzeugführer über die Eingabeeinrichtung 12 eine Wunschgeschwindigkeit v_{Wunsch} vor. Wird über die Einrichtung 9 kein Objekt bzw. Kraftfahrzeug vor dem eigenen Kraftfahrzeug ermittelt, bildet die Steuereinrichtung 8 ein Stellsignal I_{Stell} zur Einstellung der Istgeschwindigkeit vᵢₛₜ auf die Wunschgeschwindigkeit für die Einrichtung 10 zur Beeinflussung der Geschwingkeit, die Wunschgeschwindigkeit V_{Wunsch} bildet dann die Sollgeschwindigkeit. Als Einrichtung 10 zur Beeinflussung der Geschwindigkeit kommt in diesem Fall nur die Antriebsmaschine des Kraftfahrzeuges in Betracht.

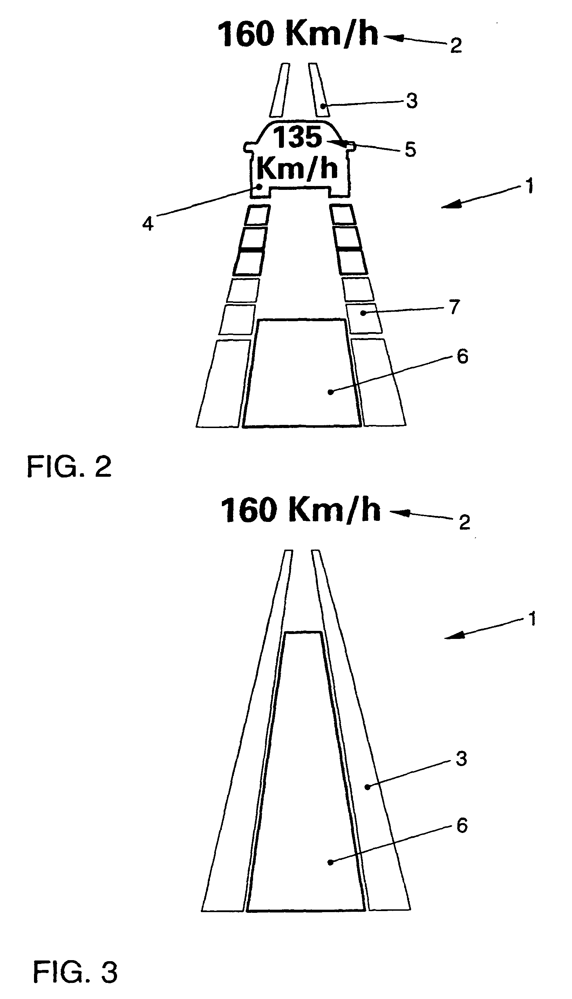

Auf der Anzeigeeinrichtung 11 erscheint beispielsweise eine Darstellung gemäß Fig. 3.

Befindet sich ein Fahrzeug vor dem eigenen Kraftfahrzeug, ermittelt die Einrichtung 9 dessen Abstand a zum eigenen Kraftfahrzeug sowie dessen Geschwindigkeit v und gibt diese Daten an die Steuereinheit 8. Die Steuereinheit 8 berechnet nun eine Stellgröße I_{Stell} für die Einrichtung 10 zur Beeinflussung der Geschwindigkeit, in Abhängigkeit der von der Einrichtung 9 erhaltenen Daten als auch der aktuellen Istgeschwindigkeit vᵢₛₜ des eigenen Kraftfahrzeuges. In diesem Fall kann als Einrichtung 10 sowohl die Antriebsmaschine des Kraftfahrzeuges als auch eine Bremseinrichtung verwendet werden. Auf der Anzeigeeinrichtung 11 erscheint eine Darstellung gemäß Fig. 2.

In der Fig. 2 ist eine beispielhafte Anzeigendarstellung 1 bei einer aktiven Abstandsregelung dargestellt. Die Anzeigendarstellung 1 umfaßt eine alphanumerisch dargestellte Wunschgeschwindigkeit 2 von 160 km/h, die mittig im oberen Bereich der Anzeigendarstellung 1 angeordnet ist. Nahezu über die ganze Höhe der Anzeigendarstellung 1 ist eine symbolhafte Fahrspur 3 in einer perspektivischen Darstellung angeordnet, so daß die Wunschgeschwindigkeit 2 sinnbildlich am Horizont der Fahrspur 3 angeordnet ist. Auf der Fahrspur 3 ist ein piktogrammförmiges Fahrzeug 4 angeordnet, dessen Geschwindigkeit 5 alphanumerisch in dem piktogrammförmigen Kraftfahrzeug 4 angeordnet ist. Innerhalb der Fahrspur 3 ist weiter ein Dynamikbalken 6 angeordnet, der die relative Position zu einem Regelziel darstellt. Vor dem Kraftfahrzeug 4 ist die Fahrspur 3 jeweils in fünf Segmente 7 unterteilt, die einen einstellbaren Folgeabstand darstellen. Der jeweils aktuell eingestellte Folgeabstand wird durch eine graphische oder farbliche Hervorhebung dargestellt. Im dargestellten Ausführungsbeispiel sind dies die ersten drei Segmente 7. Mittels der Anzeigendarstellung gemäß Fig. 2 läßt sich somit auf einen Blick die gegebene Regelsituation leicht erfassen, nämlich daß ein Fahrzeug mit einer geringeren als der Wunschgeschwindigkeit 2 erfaßt wurde, ein etwa mittlerer Folgeabstand eingestellt wurde und das Fahrzeug gegenwärtig einen größeren Abstand als den eingestellten Folgeabstand aufweist. Zusätzlich kann das aktuelle Regelziel, im Ausführungsbeispiel also das Kraftfahrzeug 4, farblich hervorgehoben werden. Wechselt nun beispielsweise das erfaßte Kraftfahrzeug die Fahrspur, so wechselt die Anzeigendarstellung 1 vom Abstandsregelungs-Modus zum Geschwindigkeitsregelungs-Modus, was in Fig. 3 dargestellt ist.

Da kein weiteres Kraftfahrzeug erfaßt wird, verschwindet das piktogrammförmige Kraftfahrzeug 4. Da somit kein Folgeabstand einzuhalten ist, wird die Fahrspur 3 durchzogen dargestellt und das aktuelle Regelziel, nämlich die Wunschgeschwindigkeit 2, farblich hervorgehoben. Der Dynamikbalken 6 symbolisiert dann durch seine Länge im Verhältnis zur dargestellten Fahrspurenlänge, wie groß die aktuelle Geschwindigkeit im Verhältnis zum Regelziel Wunschgeschwindigkeit 2 ist.

## Patentansprüche

1. Verfahren zur Darstellung der Parameter einer Abstandsregelungseinrichtung, umfassend folgende Verfahrensschritte:
a) alphanumerische Darstellung einer eingestellten Wunschgeschwindigkeit (2) am bildlichen Horizont eines Anzeigedisplays,
b) piktogrammförmige Darstellung (4) eines Fahrzeuges, falls die Sensorik der Abstandsregelung ein vorausfahrendes Fahrzeug erfasst hat,
c) symbolhafte Darstellung einer Fahrspur (3), innerhalb derer ein Dynamikbalken (6) dargestellt wird, der die relative Position zu dem vorausfahrenden Fahrzeug symbolisiert.

2. Verfahren nach Anspruch 1, **dadurch gekennzeichnet, dass** die Länge des Dynamikbalkens (6) die relative Position zu dem vorausfahrenden Fahrzeug symbolisiert.

3. Verfahren nach Anspruch 1 oder 2, **dadurch gekennzeichnet, dass** innerhalb der piktogrammförmigen Darstellung (4) des erfassten vorausfahrenden Fahrzeuges die Geschwindigkeit des erfassten vorausfahrenden Fahrzeuges dargestellt wird.

4. Verfahren nach einem der Ansprüche 1 bis 3, **dadurch gekennzeichnet, dass** bei einer Distanzregelungsanzeige die symbolhafte Darstellung der Fahrspur (3) vor der piktogrammförmigen Darstellung (4) eines erfassten Fahrzeuges innerhalb eines einstellbaren Bereiches für den Folgeabstand segmentweise unterteilt ist.

5. Verfahren nach Anspruch 4, **dadurch gekennzeichnet, dass** der aktuell eingestellte Folgeabstand graphisch oder farblich hervorgehoben wird.

6. Verfahren nach einem der Ansprüche 1 bis 5, **dadurch gekennzeichnet, dass** die einzelnen dargestellten Parameter farblich zueinander abgesetzt werden.

7. Verfahren nach einem der Ansprüche 1 bis 6, **dadurch gekennzeichnet, dass** das von der Abstandssensorik erfasste vorausfahrende Fahrzeug (4) farblich und/oder graphisch hervorgehoben wird.

8. Vorrichtung zur Darstellung der Parameter einer Abstandsregelungseinrichtung, **gekennzeichnet, durch** die alphanumerische Darstellung einer eingestellten Wunschgeschwindigkeit (2) am bildlichen Horizont eines Anzeigedisplays, eine piktogrammförmige Darstellung (4) eines Fahrzeuges, falls die Sensorik der Abstandsregelung ein vorausfahrendes Fahrzeug erfasst hat, und eine symbolhafte Darstellung einer Fahrspur (3), innerhalb derer ein Dynamikbalken (6) darstellbar ist, der die relative Position zu dem vorausfahrenden Fahrzeug symbolisiert.

9. Vorrichtung nach Anspruch 8, **dadurch gekennzeichnet, dass** die Länge des Dynamikbalkens (6) die relative Position zu dem vorausfahrenden Fahrzeug synthetisiert.

10. Vorrichtung nach Anspruch 8 oder 9, **dadurch gekennzeichnet, dass** innerhalb der piktogrammförmigen Darstellung (4) des erfassten vorausfahrenden Fahrzeuges die Geschwindigkeit des erfassten vorausfahrenden Fahrzeuges darstellbar oder dargestellt ist.

11. Vorrichtung nach einem der Ansprüche 8 bis 10, **dadurch gekennzeichnet, dass** bei einer Distanzregelungsanzeige die symbolhafte Darstellung der Fahrspur (3) vor der piktogrammförmigen Darstellung (4) eines erfassten Fahrzeuges innerhalb eines einstellbaren Bereiches für den Folgeabstand segmentweise unterteilt ist.

12. Vorrichtung nach Anspruch 11, **dadurch gekennzeichnet, dass** der aktuell eingestellte Folgeabstand auf der symbolhaften Darstellung der Fahrspur graphisch oder farblich hervorgehoben ist.

13. Vorrichtung nach einem der Ansprüche 8 bis 12, **dadurch gekennzeichnet, dass** die einzelnen dargestellten Parameter farblich zueinander abgesetzt werden.

14. Vorrichtung nach einem der Ansprüche 8 bis 13, **dadurch gekennzeichnet, dass** die Darstellung (4) des erfassten vorausfahrenden Fahrzeuges (4) farblich und/oder graphisch hervorgehoben ist.

## Claims

1. Method for representing the parameters of a distance control device, comprising the following method steps:
a) alphanumeric representation of a set desired speed (2) on the image horizon of a display,
b) representation (4) of a vehicle in the form of a pictogram if the sensor system of the distance control device has sensed a vehicle travelling ahead,
c) symbolic representation of a lane (3) within which a dynamic bar (6) which symbolizes the relative position with respect to the vehicle travelling ahead is represented.

2. Method according to Claim 1, **characterized in that** the length of the dynamic bar (6) symbolizes the relative position with respect to the vehicle travelling ahead.

3. Method according to Claim 1 or 2, **characterized in that** the speed of the sensed vehicle travelling ahead is represented within the representation (4) of the sensed vehicle travelling ahead in the form of a pictogram.

4. Method according to one of Claims 1 to 3, **characterized in that** in a distance control display, the symbolic representation of the lane (3) in front of the representation (4) of a sensed vehicle in the form of a pictogram is divided into segments within a settable region for the distance from a vehicle travelling behind.

5. Method according to Claim 4, **characterized in that** the currently set distance from a vehicle travelling behind is highlighted graphically or by means of colour.

6. Method according to one of Claims 1 to 5, **characterized in that** the individual, represented parameters are contrasted with respect to one another by means of colour.

7. Method according to one of Claims 1 to 6, **characterized in that** the vehicle (4) which is sensed by the distance sensor system and is travelling ahead is highlighted by means of colour and/or graphically.

8. Device for representing the parameters of a distance control system, **characterized by** the alphanumeric representation of a set desired speed (2) on the image horizon of a display, a representation (4) of a vehicle in the form of a pictogram if the sensor system of the distance control system has sensed a vehicle travelling ahead, and a symbolic representation of a lane (3) within which a dynamic bar (6) can be represented which symbolizes the relative position with respect to the vehicle travelling ahead.

9. Device according to Claim 8, **characterized in that** the length of the dynamic bar (6) symbolizes the relative position with respect to the vehicle travelling ahead.

10. Device according to Claim 8 or 9, **characterized in that** the speed of the sensed vehicle travelling ahead can be represented or is represented within the representation (4) of the sensed vehicle travelling ahead in the form of a pictogram.

11. Device according to one of Claims 8 to 10, **characterized in that**, in a distance control display, the symbolic representation of the lane (3) in front of the representation (4) of a sensed vehicle in the form of a pictogram is divided into segments within a settable region for the distance from a vehicle travelling behind.

12. Device according to Claim 11, **characterized in that** the currently set distance from a vehicle travelling behind is highlighted graphically or by means of colour on the symbolic representation of the lane.

13. Device according to one of Claims 8 to 12, **characterized in that** the individual represented parameters are contrasted with respect to one another by means of colour.

14. Device according to one of Claims 8 to 13, **characterized in that** the representation (4) of the sensed vehicle (4) travelling ahead is highlighted by means of colour and/or graphically.

## Revendications

1. Méthode de représentation des paramètres d'un dispositif de régulation de l'espacement entre véhicules comprenant les étapes suivantes :
a) Représentation alphanumérique d'une vitesse souhaitée réglée (2) sur l'horizon artificiel d'un afficheur,
b) Représentation sous forme de pictogramme (4) d'un véhicule, si les détecteurs du régulateur d'espacement ont détecté un véhicule qui précède,
c) Représentation symbolique d'une voie de circulation (3) à l'intérieur de laquelle est représentée une barre dynamique (6) qui symbolise la position relative par rapport au véhicule qui précède.

2. Méthode selon la revendication 1, **caractérisée en ce que** la longueur de la barre dynamique (6) symbolise la position relative du véhicule qui précède.

3. Méthode selon la revendication 1 ou 2, **caractérisée en ce que** la vitesse du véhicule détecté qui précède est représentée à l'intérieur de la représentation sous forme de pictogramme (4) du véhicule détecté qui précède.

4. Méthode selon l'une des revendications 1 à 3, **caractérisée en ce que** dans le cas d'un indicateur de régulation de la distance, la représentation symbolique de la voie de circulation (3) devant la représentation en forme de pictogramme (4) d'un véhicule détecté est divisée en segments à l'intérieur d'une zone réglable pour l'espacement séquentiel.

5. Méthode selon la revendication 4, **caractérisée en ce que** l'espacement séquentiel actuellement réglé est mis en évidence de manière graphique ou chromatique.

6. Méthode selon l'une des revendications 1 à 5, **caractérisée en ce que** les paramètres individuels représentés sont chromatiquement décalés les uns par rapport aux autres.

7. Méthode selon l'une des revendications 1 à 6, **caractérisée en ce que** le véhicule qui précède (4) détecté par les détecteurs d'espacement est mis en évidence de manière graphique et/ou chromatique.

8. Dispositif de représentation des paramètres d'un dispositif de régulation de l'espacement entre véhicules, **caractérisé par** la représentation alphanumérique d'une vitesse souhaitée réglée (2) sur l'horizon artificiel d'un afficheur, une représentation sous forme de pictogramme (4) d'un véhicule, si les détecteurs du régulateur d'espacement ont détecté un véhicule qui précède, et une représentation symbolique d'une voie de circulation (3) à l'intérieur de laquelle peut être représentée une barre dynamique (6) qui symbolise la position relative par rapport au véhicule qui précède.

9. Dispositif selon la revendication 8, **caractérisé en ce que** la longueur de la barre dynamique (6) symbolise la position relative par rapport au véhicule qui précède.

10. Dispositif selon la revendication 8 ou 9, **caractérisé en ce que** la vitesse du véhicule détecté qui précède peut être affichée ou est affichée à l'intérieur de la représentation sous forme de pictogramme (4) du véhicule détecté qui précède.

11. Dispositif selon l'une des revendications 8 à 10, **caractérisé en ce que** dans le cas d'un indicateur de régulation de la distance, la représentation symbolique de la voie de circulation (3) devant la représentation en forme de pictogramme (4) d'un véhicule détecté est divisée en segments à l'intérieur d'une zone réglable pour l'espacement séquentiel.

12. Dispositif selon la revendication 11, **caractérisé en ce que** l'espacement séquentiel actuellement réglé est mis en évidence de manière graphique ou chromatique sur la représentation symbolique de la voie de circulation.

13. Dispositif selon l'une des revendications 8 à 12, **caractérisé en ce que** les paramètres individuels représentés sont chromatiquement décalés les uns par rapport aux autres.

14. Dispositif selon l'une des revendications 8 à 13, **caractérisé en ce que** la représentation (4) du véhicule détecté qui précède (4) est mise en évidence de manière graphique et/ou chromatique.
